# FASCICULE DE BREVET EUROPEEN

(11) **EP 1 734 701 B1**
(45) Date de publication et mention de la délivrance du brevet: **14.11.2007**
(21) Numéro de dépôt: 06115517.2
(22) Date de dépôt: 15.06.2006
(51) Int. Cl.: H04L 12/46, H04L 12/413

(54) **Encapsulation de trames de type E1 sous ethernet**
Kapselung von E1-Rahmen in Ethernet
Encapsulation of E1 frames within Ethernet

(30) Priorité: 17.06.2005 FR 0551654
(43) Date de publication de la demande: 20.12.2006
(73) Titulaire: Alcatel Lucent, 75008 Paris (FR)
(72) Inventeur: Boutaud de la Combe, Xavier, 22560 Trebeurden (FR); Dupuy, Pierre, 75017 Paris (FR); Neustadt, Alf, 70180 Stuttgart (DE); Thiberville, Jean, 22560 Trebeurden (FR)
(74) Mandataire: Sciaux, Edmond

(56) Documents cités:
- TURNER, R. B.: "Legacy telecom hits the 21st century: TDM circuits on AdvancedTCA switch fabrics" COMPACTPCI AND ADVANCEDTCA SYSTEMS, [Online] mai 2005 (2005-05), pages 1-3, XP002367751 Extrait de l'Internet: URL:http://www.compactpci-systems.com/PDFs /NMS.May05.pdf> [extrait le 2006-02-14]
- Y(J) STEIN R SHASHOUA R INSLER M ANAVI RAD DATA COMMUNICATIONS: "TDM over IP" IETF STANDARD-WORKING-DRAFT, INTERNET ENGINEERING TASK FORCE, IETF, CH, vol. pwe3, no. 3, 17 février 2005 (2005-02-17), XP015026066 ISSN: 0000-0004
- VAINSHTEIN-EDITOR (AXERRA NETWORKS) Y STEIN-EDITOR (RAD COMMUNICATIONS) I SASSON (AXERRA NETWORKS) A SADOVSKI (AXERRA NETWORKS) E: "Unstructured TDM Circuit Emulation Service over Packet Switched Network (UCESoPSN) draft-vainshtein-pwe3-ucesopsn-00.txt" IETF STANDARD-WORKING-DRAFT, INTERNET ENGINEERING TASK FORCE, IETF, CH, 2 octobre 2002 (2002-10-02), XP015005580 ISSN: 0000-0004
- ALEXANDER ("SASHA") VAINSHTEIN ISRAEL SASSON AKIVA SADOVSKI AXERRA NETWORKS EDUARD METZ KPNQWEST TIM FROST ZARLINK SEMICONDUCTOR F: "TDM Circuit Emulation Service over Packet Switched Network (CESoPSN) draft-vainshtein-cesopsn-02.txt" IETF STANDARD-WORKING-DRAFT, INTERNET ENGINEERING TASK FORCE, IETF, CH, no. 2, août 2002 (2002-08), XP015005576 ISSN: 0000-0004

## Description

L'invention concerne les réseaux de transport, et plus particulièrement l'interconnexion entre les réseaux de transport plésiochrone de type PDH (« Plesiochronous Digital Hierarchy » - hiérarchie numérique plésiochrone) et les réseaux de transport asynchrone.

Comme le sait l'homme de l'art, à chaque type de réseau de transport correspond au moins un type de trame de transport de données. Ainsi, dans les réseaux synchrones de type PDH les données sont transmises sous la forme de trames de type dit E1 et analogues (tels que T1, J1, E2, T3 ou J3, notamment) tandis que dans les réseaux asynchrones les données peuvent être transmises sous la forme de trames dites Ethernet.

Pour qu'un réseau d'un second type (par exemple Ethernet) puisse transporter, de façon transparente, sans perte d'information, et si possible avec un délai de transmission faible et garanti, les trames provenant d'un réseau d'un premier type (PDH), il faut prévoir au niveau des interfaces de connexion de ces réseaux des équipements capables de transformer (par exemple encapsuler) une partie au moins des trames qu'ils reçoivent.

Plusieurs solutions ont été proposées pour permettre une telle transformation.

Ainsi, il a été proposé par l'organisme de standardisation PICMG une solution appelée I-TDM consistant à transporter sur Ethernet des canaux TDM (« Time Division Multiplexing » - multiplexage temporel) contenant une partie des données contenues dans les trames de type E1. Un inconvénient de cette technique réside dans le fait que les octets de données TDM, sont extraits de la trame E1 par les constructeurs de trames E1 (ou « E1 framers ») ce qui n'est pas optimal pour la mise en oeuvre de certaines fonctionnalités offertes par certaines architectures récentes dites à terminaison de trames, telles que celle dite aTCA, du fait de la présence d'un entête dans la trame Ethernet (ou « overhead ») pour chaque canal TDM (cf. par exemple R. Brough Turner "Legacy telecom hits the 21 st century: TDM circuits on advanced TCA switch fabrics").

Il est rappelé qu'une architecture aTCA offre une modularité aux équipements de télécommunication, mais elle n'offre pas une indépendance entre la protection des lignes de type E1 (appelée APS pour « Automatic Protection Switch ») et la protection des cartes de terminaison de lignes (appelée EPS pour « Equipment Protection Switching »).

Il a également été proposé par l'organisme de standardisation IETF, et notamment par son groupe de travail PWE3, une solution appelée CES (pour « Circuit Emulation Services - services d'émulation en mode circuit), ainsi qu'une solution de transport de canaux TDM sur protocole Internet appelée TDMoIP (« TDM over IP »). Ces deux solutions consistent en des protocoles de transport sur IP (« Internet Protocol ») dont les couches de transport respectives génèrent des entêtes de grande taille et donc limitent la capacité de transport du réseau, c'est-à-dire le nombre de liaisons (ou lignes) de type E1 pouvant être transportées par un réseau de type Giga Ethernet.

L'invention a donc pour but d'améliorer la situation, et notamment de permettre le transport de trames de type E1 sur Ethernet au sein, par exemple, d'une architecture aTCA.

Elle propose à cet effet un dispositif de traitement de trames de données de type E1, pour un équipement de réseau de communication.

Ce dispositif se caractérise par le fait qu'il comprend des moyens de traitement chargés, lorsqu'ils reçoivent au moins une trame de type E1 destinée à un port de destination E1 donné, d'encapsuler la totalité de cette trame de type E1 dans un champ de données utiles (ou « payload ») d'une trame Ethernet afin de la transmettre vers un port de destination Ethernet permettant d'accéder au port de destination E1 donné.

Le dispositif selon l'invention peut comporter d'autres caractéristiques qui peuvent être prises séparément ou en combinaison, et notamment :
- ses moyens de traitement peuvent être chargés, lorsqu'ils reçoivent plusieurs trames de type E1 destinées à un port de destination Ethernet commun permettant d'accéder à leurs ports de destination E1 donnés respectifs, d'une première part, de regrouper certaines au moins de ces trames de type E1 afin de constituer au moins un ensemble d'au plus n trames de type E1, d'une deuxième part, d'associer à chaque ensemble un entête de contrôle comprenant des données qui le représentent, et d'une troisième part, d'encapsuler les trames de type E1 de chaque ensemble et l'entête de contrôle associé dans un champ de données utiles (« payload ») d'une trame Ethernet afin de la transmettre vers le port de destination Ethernet commun ;
   ➢ ses moyens de traitement peuvent être chargés de délivrer périodiquement une trame Ethernet comportant au plus n trames de type E1 et l'entête de contrôle associé et destinées à un port de destination Ethernet commun ;
   ➢ en cas de regroupement d'un nombre de trames de type E1 supérieur à n, ses moyens de traitement peuvent être chargés de constituer au moins deux trames Ethernet comportant chacune au plus n trames de type E1 destinées à un même port de destination Ethernet commun;
- le nombre n de trames de type E1 d'un ensemble est un entier qui peut par exemple être compris entre 1 et 46, et de préférence entre 1 et 32 ;
- ses moyens de traitement peuvent être chargés d'intégrer dans au moins certains des entêtes de contrôle des données représentatives d'un numéro de trame Ethernet et/ou d'un numéro de séquence et/ou d'informations de synchronisation ;
- ses moyens de traitement peuvent être chargés d'adjoindre à chaque trame E1 reçue un entête comprenant des données représentatives au moins de son port de destination E1 donné, avant d'encapsuler cette trame E1 et l'entête adjoint dans le champ de données utiles (payload) d'une trame Ethernet ;
   ➢ ses moyens de traitement peuvent être chargés d'intégrer dans au moins certains des entêtes adjoints aux trames de type E1 des données représentatives du type de trame et/ou d'au moins un statut de trame et/ou d'une information de justification de rythme (appelée « stuffing » négatif ou nul ou positif) ;
- en cas de réception d'une trame Ethernet encapsulant au plus n trames E1, ses moyens de traitement peuvent être chargés d'extraire de cette trame Ethernet les trames de type E1 encapsulées, de manière à les délivrer sur des sorties permettant d'accéder à leurs ports de destination E1 donnés respectifs.

L'invention propose également un équipement de terminaison physique de lignes de type E1, pour un réseau de communication, comprenant au moins une interface de lignes chargée de recevoir des trames de données de type E1 et au moins un dispositif de traitement du type de celui présenté ci-avant et couplé à l'interface de lignes de type E1 afin d'échanger avec celle-ci des trames de type E1.

L'invention propose également un équipement de terminaison logique de lignes de type E1, pour un réseau de communication, comprenant :
- au moins un dispositif de traitement du type de celui présenté ci-avant et propre à échanger des trames Ethernet encapsulant au plus n trames de type E1 avec un équipement de terminaison physique de lignes de type E1 du type de celui présenté ci-avant, et
- des moyens de tramage alimentés en trames de type E1 par la carte de terminaison logique de lignes de type E1 et chargés d'extraire de ces trames de type E1 les canaux qu'elles contiennent, ainsi qu'éventuellement
- des moyens de traitement chargés de traiter les canaux extraits par les moyens de tramage.

L'invention propose en outre un équipement d'aiguillage de trames, pour un réseau de communication asynchrone, comprenant :
- au moins un aiguilleur de trames Ethernet comprenant au moins une entrée pour recevoir des trames Ethernet générées par un équipement de terminaison physique de lignes de type E1 du type de celui présenté ci-avant et chargé d'aiguiller chaque trame Ethernet reçue sur une sortie choisie en fonction d'instructions (générées par d'éventuels moyens de contrôle), et
- un équipement de terminaison logique de lignes de type E1 du type de celui présenté ci-avant, alimenté en trames Ethernet par l'aiguilleur de trames Ethernet.

D'autres caractéristiques et avantages de l'invention apparaîtront à l'examen de la description détaillée ci-après, et des dessins annexés, sur lesquels :

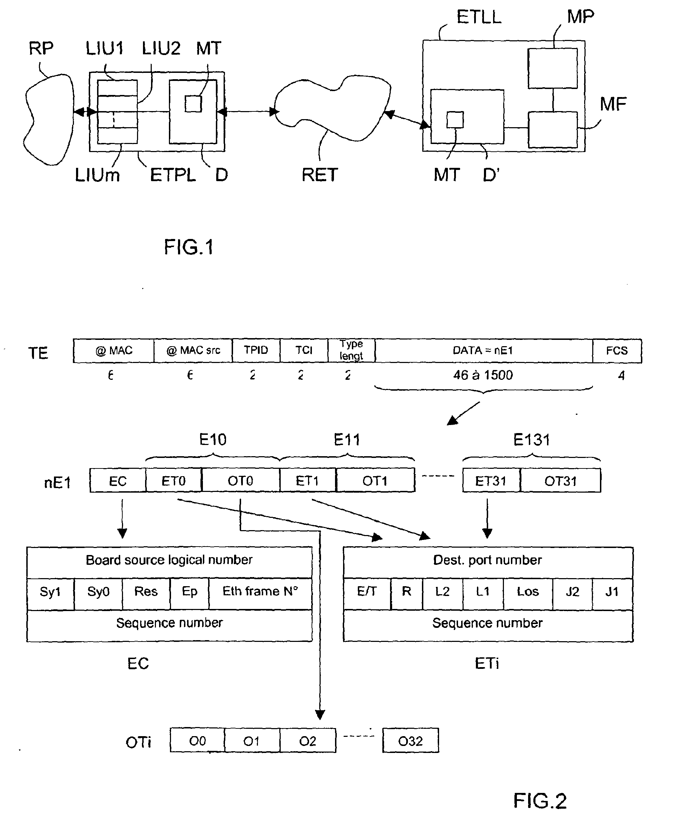

- la figure 1 illustre de façon schématique et fonctionnelle un exemple de réalisation d'un équipement de terminaison physique de lignes de type E1 pourvu d'un dispositif de traitement de trames de type E1 selon l'invention, et un exemple de réalisation d'un équipement de terminaison logique de lignes de type E1 selon l'invention, également pourvu d'un dispositif de traitement de trames de type E1 selon l'invention,
- la figure 2 illustre de façon schématique une trame Ethernet et notamment son champ de données utiles (DATA) qui comporte plusieurs trames de type E1 encapsulées conformément à l'invention, et

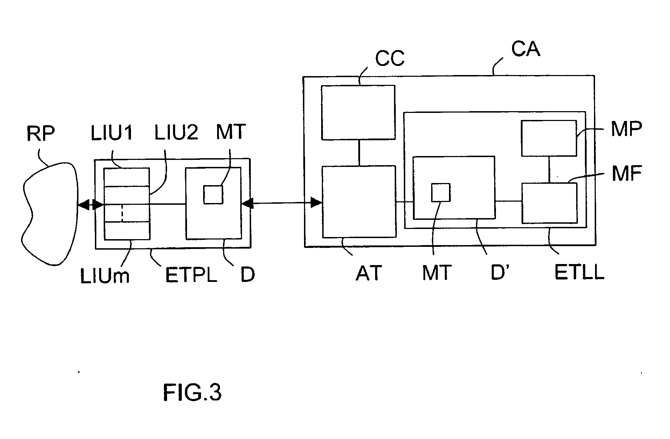

- la figure 3 illustre de façon schématique et fonctionnelle un exemple de réalisation d'un équipement de terminaison physique de lignes de type E1 pourvu d'un dispositif de traitement de trames de type E1 selon l'invention, couplé à un exemple de réalisation d'un équipement d'aiguillage de trames selon l'invention, également pourvu d'un dispositif de traitement de trames de type E1 selon l'invention, dans une architecture aTCA.

Les dessins annexés pourront non seulement servir à compléter l'invention, mais aussi contribuer à sa définition, le cas échéant.

L'invention a pour objet de permettre le transport sur Ethernet de trames de données de type E1 provenant d'un réseau de transport plésiochrone de type PDH, notamment au sein d'une architecture aTCA.

Dans ce qui suit, on considère, à titre d'exemple non limitatif, que les trames de données à transporter sur Ethernet sont des trames E1. Mais, l'invention n'est pas limitée à ce type de trame. Elle concerne effectivement toutes les trames de type E1 provenant d'un réseau de transport plésiochrone de type PDH, et notamment les trames T1, J1, E3, T3 et J3.

On se réfère tout d'abord à la figure 1 pour décrire un premier exemple de mise en oeuvre de l'invention. Dans ce premier exemple, un réseau plésiochrone PDH (« Plesiochronous Digital Hierarchy ― hiérarchie numérique plésiochrone) est raccordé à un réseau asynchrone de type Ethernet RET via un premier équipement de réseau ETPL, le réseau Ethernet RET étant lui-même raccordé à un second équipement de réseau ETLL.

Le premier équipement de réseau ETPL est ce que l'homme de l'art appelle généralement un équipement de terminaison physique de lignes E1. Ce premier équipement de réseau ETPL est destiné à terminer physiquement les lignes (ou connexions) E1, établies entre le réseau PDH RP et le réseau Ethernet RET, et à encapsuler les trames E1 qu'il reçoit dans des trames de transport Ethernet. A cet effet, il comprend au moins une interface de lignes E1 LIUi couplée à au moins un dispositif de traitement de trames E1 D.

Le nombre d'interfaces de lignes E1 LlUi dépend du nombre de liaisons établies entre le réseau PDH et le premier équipement de réseau ETPL. Ici, ce nombre est égal à m (i = 1 à m), mais il peut prendre n'importe quelle valeur entière supérieure à 0. Par exemple m est égal à 256. Les entrées/sorties de chaque interface de lignes LlUi définissent des ports E1. Par ailleurs, le nombre de dispositifs de traitement D dépend du nombre d'interfaces Ethernet auquel est couplé le premier équipement de réseau ETPL. Ici, ce nombre est égal à 1, mais il peut prendre n'importe quelle valeur entière supérieure à 0.

Chaque interface de lignes LlUi est par exemple ce que l'homme de l'art appelle en anglais « Line Interface Unit » (ou LIU - unité d'interface de lignes (ou connexions)). Elle est destinée à terminer physiquement (et non pas logiquement) une ligne (ou connexion) E1 qui est établie entre le réseau PDH RP, auquel elle est raccordée, et le réseau Ethernet RET. Il est rappelé qu'une interface de lignes LlUi est chargée de récupérer le rythme des trames E1 qu'elle reçoit et d'identifier ce que l'homme de l'art appelle les « temps/bits » afin de leur associer le rythme récupéré.

Chaque interface de lignes LlUi comporte une sortie alimentant le dispositif D en trames E1 qu'elle reçoit du réseau PDH RP.

Selon l'invention, le dispositif de traitement D comprend un module de traitement MT chargé, lorsqu'il reçoit au moins une trame E1 provenant d'au moins une interface de lignes LlUi et destinée à un port de destination E1 donné (d'un module de tramage MF sur lequel on reviendra plus loin), d'encapsuler la trame de type E1 dans un champ de données utiles (ou « payload »), appelé DATA, d'une trame Ethernet TE, afin de la transmettre vers un port de destination Ethernet permettant d'accéder au port de destination E1 donné.

Lorsque l'on ne fonctionne pas avec des assignations fixes des lignes E1 sur des ports de destination E1 fixes d'un module de tramage MF, le module de traitement MT est également chargé d'adjoindre à chaque trame E1 reçue un entête ETi comprenant des données représentatives au moins de son port de destination E1 donné, avant de l'encapsuler dans le champ de données utiles (ou « payload ») DATA d'une trame Ethernet TE.

Afin d'optimiser la transmission des trames E1 qui sont destinées à un port de destination Ethernet commun permettant d'accéder à leurs ports de destination E1 donnés respectifs, le module de traitement MT est configuré de manière à regrouper plusieurs trames E1, reçues par plusieurs interfaces de lignes LlUi et désignant un même port de destination Ethernet, afin d'adjoindre éventuellement un entête (dans le cas d'une assignation non fixe) à chacune d'entre elles, puis d'encapsuler ces trames E1 (avec leurs éventuels entêtes adjoints ETi) dans une même trame Ethernet TE. Chaque regroupement constitue un ensemble d'au plus n trames E1 (à éventuels entêtes adjoints) destinées à un même port de destination Ethernet commun. Le nombre maximal n de trames E1 d'un regroupement peut par exemple être égal à 32. Mais, il peut aller jusqu'à 46 (n=46). Ce nombre peut par exemple varier d'une trame Ethernet à l'autre, tout en étant au plus égal à n, en fonction du nombre de trames E1 (destinées à un même port de destination Ethernet commun) reçues par le module de traitement MT.

Si le nombre p de trames E1 reçues et destinées à un même port de destination Ethernet commun est inférieur à n, alors l'ensemble constitué ne comporte que p trames E1. En revanche, si le nombre p de trames E1 reçues et destinées à un même port de destination Ethernet commun est supérieur à n, alors le module de traitement MT constitue plusieurs (au moins deux) ensembles comportant chacun au plus n trames E1.

Comme indiqué ci-dessus, le module de traitement MT peut, dans le cas d'une assignation de lignes E1 non fixe, adjoindre à chaque trame E1 d'un ensemble un entête ETi comprenant des données représentatives au moins de son port de destination E1 donné.

Chaque ensemble est ensuite associé par le module de traitement MT à un entête de contrôle EC, représentatif notamment de l'ensemble de ses trames E1 (à éventuels entêtes adjoints). Un ensemble de trames E1 (à éventuels entêtes adjoints) et l'entête de contrôle EC associé constituent un groupe nE1. Puis, le module de traitement MT encapsule le groupe nE1 dans le champ DATA dédié aux données utiles (ou « payload ») d'une trame Ethernet TE.

Un exemple de trame Ethernet TE, générée par le dispositif D, est schématiquement illustré sur la figure 2. Dans cet exemple, le champ DATA de la trame Ethernet TE, dédié aux données utiles (payload), comprend un groupe nE1 constitué d'un entête de contrôle EC et de 32 (=n) trames E1, référencées E10 à E131. Chaque trame E1i comporte ici un entête adjoint ETi et des données utiles OTi agencées sous la forme d'au plus 33 octets 00 à 032.

Une trame E1 contient habituellement au plus 32 octets. Le 33^{ième} octet sert ici à transporter l'éventuel 257^{ième} bit de la trame E1 qui est constituée à chaque période (ici toutes les 125 µs), et sur lequel on reviendra plus loin.

Comme indiqué précédemment, dans le cas d'une assignation de lignes E1 non fixe l'entête adjoint ETi à chaque trame E1i d'un groupe nE1 comporte un champ (ici référencé « Dest. port number ») dont la valeur désigne le numéro de port de terminaison logique (donc le numéro de port E1 d'un module de tramage MF d'un second équipement de terminaison logique de liens E1 ETLL sur lequel on reviendra plus loin) auquel est destinée la trame E1. Le port de destination Ethernet commun d'une trame Ethernet est alors l'un des ports du second équipement de terminaison logique de liens E1 ETLL.

Comme cela est illustré sur la figure 2, un entête adjoint ETi peut comporter un ou plusieurs autres champs complémentaires.

Ainsi, le module de traitement MT peut intégrer dans un champ auxiliaire (ici référencé « E/T ») de certains au moins des entêtes adjoints ETi des données représentatives du type de trame encapsulée. Ce champ E/T est utilisé lorsque les interfaces de lignes LlUi reçoivent du (de) réseau(x) PDH des trames de types différents, par exemple des trames E1 et T1 (ou J1). La valeur du champ E/T indique alors le type de la trame comportant l'entête adjoint ETi dont il fait partie.

Le module de traitement MT peut également intégrer dans deux autres champs auxiliaires (ici référencés « L2 » et « L1 ») de certains au moins des entêtes adjoints ETi des données représentatives d'au moins un statut de trame encapsulée. Dans le sens allant d'un second équipement ETLL (sur lequel on reviendra plus loin) vers le premier équipement ETPL, ces champs L2 et L1 sont par exemple utilisés pour commander des tests de rebouclage interne et/ou externe. Dans le sens allant du premier équipement ETPL vers un second équipement ETLL, les valeurs des champs L2 et L1 indiquent le statut de la trame comportant l'entête adjoint ETi dont ils font partie.

Le module de traitement MT peut également intégrer dans un autre champ auxiliaire (ici référencé « Los ») de certains au moins des entêtes adjoints ETi des données représentatives d'une éventuelle perte de synchronisation. Ce champ Los est utilisé lorsqu'un statut LOS a été détecté par une interface de lignes LlUi d'un premier équipement ETPL. La valeur du champ Los indique au second équipement ETLL que l'interface de lignes LlUi du premier équipement ETPL a perdu la synchronisation bit (ou rythme bit) du lien E1 concerné.

Le module de traitement MT peut également intégrer dans deux autres champs auxiliaires (ici référencés « J2 » et « J1 ») de certains au moins des entêtes adjoints ETi des données dites de justification de trame encapsulée. Ces champs J2 et J1 sont par exemple utilisés pour signaler l'éventuel écart de rythme d'une trame encapsulée par rapport à un rythme choisi. C'est ce que l'homme de l'art appelle en anglais « stuffing ».

Il est rappelé que les différentes trames de type E1 d'un groupe nE1 proviennent d'interfaces de lignes LlUi différentes et que de ce fait elles peuvent posséder leurs propres rythmes. Pour déterminer l'écart d'un rythme de trame par rapport au rythme choisi on utilise généralement une mémoire de type FIFO (« First In First Out » - premier arrivé premier sorti) dont on consulte la valeur (c'est-à-dire le remplissage) tous les 8 kHz, par exemple. On a donc une FIFO par ligne E1. A chaque période d'observation d'une FIFO, (ici tous les 125µs), s'il y a 256 bits dans la FIFO, cela signifie que le rythme correspond au rythme choisi (la justification est alors dite nulle), en revanche s'il y a 255 bits dans la FIFO, cela signifie que le rythme est inférieur au rythme choisi (la justification est alors dite négative), et s'il y a 257 bits dans la FIFO, cela signifie que le rythme est supérieur au rythme choisi (la justification est alors dite positive). C'est ce 257^{ième} bit qui est éventuellement intégré dans le 33^{ième} octet réservé à une trame E1 au sein d'une trame Ethernet TE. Ainsi, avec un seul rythme choisi on peut transporter l'information de synchronisation.

L'entête de contrôle EC, qui est associé à un ensemble de trames E1 (à éventuels entêtes adjoints ETi), comprend préférentiellement un champ (ici référencé « Eth. frame N° ») utilisé lorsqu'une séquence de plusieurs trames Ethernet TE est générée par le module de traitement MT du fait qu'un nombre p de trames E1 (destinées à un même port de destination Ethernet commun), supérieur à n, ont été reçues. La valeur de ce champ indique alors la position de la trame Ethernet à laquelle il appartient par rapport aux autres trames Ethernet de la même séquence.

L'entête de contrôle EC peut également comprendre un champ (ici référencé « Sequence number ») utilisé pour détecter la perte ou le déséquencement des trames Ethernet TE (également appelées « paquets Ethernet » par opposition aux trames E1 provenant d'un réseau PDH). La valeur de ce champ « Sequence number » sert donc à vérifier si des trames Ethernet ont été perdues.

L'entête de contrôle EC peut également comprendre deux autres champs (ici référencés « Sy1 » et « Sy0 ») dont les valeurs sont représentatives d'informations de synchronisation de trames Ethernet TE. Ces champs sont utiles lorsque la synchronisation entre un émetteur (ici un premier équipement de réseau ETPL) et un récepteur (ici un second équipement de réseau ETLL) se fait selon un mécanisme dit « dans la bande » (ou « in band »).

La synchronisation dans la bande consiste à transmettre au second équipement de réseau ETLL des trames (ou paquets) Ethernet comportant une étiquette signalant qu'ils sont synchronisant. Cela peut se faire soit par génération de trames Ethernet spécifiques au niveau du dispositif D, soit par l'utilisation par le dispositif D d'un champ de synchronisation dans une trame Ethernet de données TE. Ces trames (ou paquets) Ethernet synchronisant, ou bien la valeur du champ de synchronisation, sont (est) alors utilisé(s) en réception par le second équipement de réseau ETLL pour recréer le rythme.

A la place d'un mécanisme de synchronisation dans la bande, on peut utiliser un mécanisme de synchronisation dit hors de la bande (ou « out band »). Mais, cela nécessite l'utilisation d'un lien dédié autre qu'Ethernet entre un émetteur (ETPL) et un récepteur (ETLL).

Le module de traitement MT peut également être agencé de manière à supporter un protocole de contrôle de configuration à distance et/ou dynamique. Un tel protocole de contrôle peut par exemple s'exécuter sur IP. Il peut par ailleurs être mis en oeuvre selon un mécanisme dans la bande ou hors de la bande.

Par ailleurs, le module de traitement MT peut également être agencé de manière à participer à un mécanisme de supervision dans la bande destiné à permettre la détection de problèmes sur les liens physiques sur lesquels les trames Ethernet TE circulent. Le module de traitement MT envoie en effet, parallèlement aux trames Ethernet TE, des trames supplémentaires de supervision qui sont utilisées par des destinataires pour déterminer s'ils peuvent le joindre. Le module de traitement MT fait de même avec les trames de supervision qu'il reçoit des destinataires pour déterminer s'ils sont joignables.

Le dispositif D est chargé de transmettre périodiquement (par exemple toutes les 125 µs) les trames Ethernet TE (contenant les trames E1 encapsulées) à un second équipement de réseau ETLL (évoqué précédemment) dont l'un des ports Ethernet est le port de destination Ethernet commun desdites trames Ethernet TE, et qui contient un équipement (module de tramage MF) comprenant au moins un port de destination E1.

Le second équipement de réseau ETLL (quand il agit en tant que récepteur, comme illustré sur la figure 1), est ce que l'homme de l'art appelle généralement un équipement de terminaison logique de lignes E1. Ce second équipement de réseau ETLL est destiné à terminer logiquement les lignes (ou connexions) E1, établies entre le réseau PDH RP et le réseau Ethernet RET, afin d'extraire les canaux qui sont contenus dans les trames de type E1 ETi encapsulées dans les trames Ethernet TE transmises par le premier équipement de réseau ETPL (quand il agit en tant qu'émetteur).

On entend ici par « terminer logiquement les lignes E1 », le fait d'extraire les canaux TDM qui sont contenus dans les trames E1 que contiennent respectivement les lignes E1.

Il est important de noter que le premier équipement ETPL n'agit pas exclusivement en tant qu'émetteur et que le second équipement ETLL n'agit pas exclusivement en tant que récepteur. Ils fonctionnent en effet de façon bidirectionnelle, l'un étant émetteur lorsque l'autre est récepteur et réciproquement.

C'est la raison pour laquelle le second équipement de réseau ETLL comprend au moins un dispositif de traitement de trames E1 D', similaire à celui (D) présenté ci-avant.

Lorsque le dispositif D' agit en tant que récepteur, son module de traitement MT est chargé d'extraire de chaque trame Ethernet TE, générée par le dispositif D d'un (premier) équipement de terminaison physique de lignes E1 ETPL, les trames de type E1 qui s'y trouvent encapsulées, et dont le nombre est au plus égal à n, ainsi que leurs ports de destination E1 respectifs.

Par ailleurs, lorsque le dispositif D' agit en tant qu'émetteur, son module de traitement MT est chargé de constituer des trames Ethernet TE encapsulant au plus n trames de type E1. Dans ce cas, le dispositif D d'un (premier) équipement ETPL agit en tant que récepteur, et son module de traitement MT est chargé d'extraire de chaque trame Ethernet TE, générée par le dispositif D', les trames de type E1 qui s'y trouvent encapsulées, afin de les adresser à ses interfaces de lignes LlUi concernées compte tenu de leurs ports de destination E1 respectifs.

La sortie du dispositif D' alimente en trames E1 (éventuellement regroupées) un module de tramage (ou de construction de trames, ou encore « E1 framer ») MF. En effet, lorsque le dispositif D' reçoit une séquence de trames Ethernet TE comportant des trames E1 encapsulées destinées à des ports destinataires E1 du module de tramage MF, son module de traitement MT est chargé de désencapsuler les trames E1 et de les présenter au bon port (destinataire) E1 du module de tramage MF en analysant la valeur du champ « Dest. Port number » de l'entête qui leur est associé.

Le module de tramage MF est chargé d'extraire des trames E1 qu'il reçoit les canaux TDM qu'elles contiennent respectivement selon une technique bien connue de l'homme de l'art, et conforme au standard G704.

La sortie du module de tramage MF alimente un module de traitement de canaux MP dont le type dépend de l'application pour laquelle est conçu le second équipement ETLL.

On se réfère maintenant à la figure 3 pour décrire un exemple de mise en oeuvre de l'invention dans le cas d'une architecture de type aTCA. Mais, l'invention n'est pas limitée à ce type d'architecture. Elle s'applique en effet dès qu'un transport de trames de type E1 doit se faire sur Ethernet.

Dans ce second exemple, le réseau plésiochrone PDH est raccordé à un second équipement de réseau CA via un premier équipement de réseau ETPL, conformément à une architecture aTCA.

Le premier équipement de réseau ETPL est sensiblement identique sur le plan fonctionnel à celui décrit précédemment en référence à la figure 1. Cet équipement de terminaison physique de lignes E1 ETPL ne sera donc pas décrit de nouveau. Il constitue dans une architecture aTCA ce que l'homme de l'art appelle généralement un rayonnage auxiliaire (ou « auxiliary shelf »).

Dans une architecture aTCA, le second équipement de réseau CA est ce que l'homme de l'art appelle généralement un châssis aTCA. Ce châssis CA est destiné à terminer logiquement les lignes E1. Il peut éventuellement être raccordé à un réseau Internet (ou IP), via une application interne (MP) afin de lui communiquer les données qui sont extraites des canaux TDM contenus dans les trames de type E1 qui sont encapsulées dans les trames Ethernet qu'il reçoit en provenance d'un premier équipement ETPL.

Ce châssis CA comprend au moins un aiguilleur de trames Ethernet AT, au moins un équipement de terminaison logique de lignes E1 ETLL (du type de celui décrit précédemment en référence à la figure 1), couplé à l'aiguilleur de trames AT et que l'homme de l'art appelle généralement (dans une architecture aTCA) un rayonnage principal (ou « main shelf »), ainsi qu'éventuellement une carte de contrôle CC couplée à l'aiguilleur de trames AT.

Il est important de noter que le châssis CA peut comporter plusieurs aiguilleurs de trames AT et plusieurs équipements de terminaison logique de lignes E1 (ou rayonnages principaux) ETLL. Par ailleurs, on peut envisager que l'aiguilleur de trames AT soit externe au châssis CA, voire même qu'il fasse partie du premier équipement ETPL.

L'aiguilleur de trames AT est chargé d'aiguiller les trames Ethernet TE, qu'il reçoit sur chacune de ses entrées, couplées à un ou plusieurs dispositifs D d'un ou plusieurs premiers équipements ETPL, vers l'une de ses sorties couplées à des rayonnages principaux ETLL, éventuellement en fonction d'instructions reçues de la carte de contrôle CC.

Le rayonnage principal ETLL est sensiblement identique au second équipement de réseau ETLL décrit précédemment en référence à la figure 1. Cet équipement de terminaison logique de lignes E1 ETLL ne sera donc pas décrit de nouveau.

Le dispositif de traitement D, D' selon l'invention, et notamment son module de traitement MT, peut être réalisé sous la forme de circuits électroniques, de modules logiciels (ou informatiques), ou d'une combinaison de circuits et de logiciels.

L'invention peut être mise en oeuvre dans des équipements dont l'architecture de commutation s'articule autour de commutateurs (ou « switches ») Ethernet, comme par exemple ceux utilisés dans les équipements télécom connus sous le nom de passerelle média voix (ou MGW pour « Media GateWay »), ou dans des contrôleurs de station de base (ou BSC pour « Base Station Controller », ou RNC pour « Radio Network Controller »), ou encore dans des noeuds de type SGSN.

Grâce à l'invention, en présence d'une architecture de type aTCA, la terminaison physique des lignes peut être effectivement réalisée dans un rayonnage auxiliaire différent du rayonnage principal (et externe au châssis qui le contient). Par conséquent, dans un équipement basé sur l'architecture aTCA, l'indépendance entre la protection de lignes (ou APS pour « Automatic Protection Switch » - assurée par le rayonnage auxiliaire ETPL) et la protection des cartes de terminaison de lignes (ou EPS pour « Equipment Protection Switching» - assurée par le rayonnage principal ETLL), peuvent être effectivement assurées.

L'invention ne se limite pas aux modes de réalisation de dispositif de traitement, d'équipement de terminaison physique de lignes de type E1, d'équipement de terminaison logique de lignes de type E1, et d'équipement d'aiguillage de trames décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de mise en oeuvre de l'invention dans le cas de trames E1. L'encapsulation sur Ethernet de toutes les trames de type E1 provenant d'un réseau de transport plésiochrone de type PDH, et notamment les trames T1, J1, E3, T3 et J3, est aussi envisageable. L'objet de l'invention est seulement défini par les revendications indépendantes ci-jointes.

## Revendications

1. Dispositif (D ;D') de traitement de trames de données de type E1, pour un équipement (ETPL ;ETLL) de réseau de communication, **caractérisé en ce qu**'il comprend des moyens de traitement (MT) agencés, en cas de réception d'au moins une trame de type E1 destinée à un port de destination E1 donné, pour encapsuler la totalité de ladite trame de type E1 reçue dans un champ de données utiles d'une trame Ethernet afin de la transmettre vers un port de destination Ethernet permettant d'accéder audit port de destination E1 donné.

2. Dispositif selon la revendication 1, **caractérisé en ce que** lesdits moyens de traitement (MT) sont agencés, en cas de réception de plusieurs trames de type E1 destinées à un port de destination Ethernet commun permettant d'accéder à leurs ports de destination E1 donnés respectifs, i) pour regrouper certaines au moins de ces trames de type E1 de manière à constituer au moins un ensemble d'au plus n trames de type E1, ii) pour associer à chaque ensemble un entête de contrôle comprenant des données qui le représentent, et iii) pour encapsuler les trames de type E1 de chaque ensemble et l'entête de contrôle associé dans un champ de données utiles d'une trame Ethernet afin de la transmettre vers ledit port de destination Ethernet commun.

3. Dispositif selon la revendication 2, **caractérisé en ce que** lesdits moyens de traitement (MT) sont agencés pour délivrer périodiquement une trame Ethernet, comportant au plus n trames de type E1 et l'entête de contrôle associé, et destinée à un port de destination Ethernet commun.

4. Dispositif selon l'une des revendications 2 et 3, **caractérisé en ce que** lesdits moyens de traitement (MT) sont agencés, en cas de regroupement d'un nombre de trames de type E1 supérieur à n, pour constituer au moins deux trames Ethernet comportant chacune au plus n trames de type E1 désignant un même port de destination Ethernet commun.

5. Dispositif selon l'une des revendications 1 à 4, **caractérisé en ce que** le nombre n de trames de type E1 d'un ensemble est un entier compris entre 1 et 46.

6. Dispositif selon l'une des revendications 2 à 5, **caractérisé en ce que** lesdits moyens de traitement (MT) sont agencés pour intégrer dans au moins certains des entêtes de contrôle des données représentatives d'un numéro de trame Ethernet et/ou d'un numéro de séquence et/ou d'informations de synchronisation.

7. Dispositif selon l'une des revendications 1 à 6, **caractérisé en ce que** lesdits moyens de traitement (MT) sont agencés pour adjoindre à chaque trame E1 reçue un entête comprenant des données représentatives au moins dudit port de destination E1 donné, avant d'encapsuler ladite trame E1 et l'entête adjoint dans ledit champ de données utiles d'une trame Ethernet.

8. Dispositif selon la revendication 7, **caractérisé en ce que** lesdits moyens de traitement (MT) sont agencés pour intégrer dans au moins certains des entêtes adjoints aux trames de type E1 des données représentatives du type de trame et/ou d'au moins un statut de trame et/ou d'une information de justification de rythme.

9. Dispositif selon l'une des revendications 1 à 8, **caractérisé en ce que** lesdits moyens de traitement (MT) sont agencés, en cas de réception d'une trame Ethernet encapsulant au plus n trames E1, pour extraire de ladite trame Ethernet lesdites trames de type E1 encapsulées, de manière à les délivrer sur des sorties permettant d'accéder à leurs ports de destination E1 donnés respectifs.

10. Equipement de terminaison physique de lignes de type E1 (ETPL), pour un réseau de communication, **caractérisé en ce qu**'il comprend au moins une interface de lignes de type E1 (LlUi) propre à recevoir des trames de données de type E1 et au moins un dispositif de traitement (D) selon l'une des revendications précédentes, couplé à ladite interface de lignes de type E1 (LlUi) de manière à échanger avec celle-ci des trames de type E1.

11. Equipement de terminaison logique de lignes de type E1 (ETLL), pour un réseau de communication, **caractérisé en ce qu'**il comprend i) au moins un dispositif de traitement (D) selon l'une des revendications 1 à 9 propre à échanger des trames Ethernet encapsulant au plus n trames de type E1 avec un équipement de terminaison physique de lignes de type E1 (ETPL) selon la revendication 10, et ii) des moyens de tramage (MF) alimentés en trames de type E1 par ledit dispositif (D) et agencés pour extraire desdites trames de type E1 les canaux qu'elles contiennent.

12. Equipement selon la revendication 11, **caractérisé en ce qu**'il comprend des moyens de traitement (MP) agencés pour traiter lesdits canaux extraits par lesdits moyens de tramage (MF).

13. Equipement d'aiguillage de trames (CA) pour un réseau de communication asynchrone, **caractérisé en ce qu**'il comprend i) au moins un aiguilleur de trames Ethernet (AT) comprenant au moins une entrée propre à recevoir des trames Ethernet générées par un équipement de terminaison physique de lignes de type E1 (ETPL) selon la revendication 10 et à aiguiller chaque trame Ethernet reçue sur une sortie choisie en fonction d'instructions, et ii) au moins un équipement de terminaison logique de lignes de type E1 (ETPL) selon la revendication 11 alimenté en trames Ethernet par ledit aiguilleur de trames Ethernet (AT).

## Claims

1. A processor apparatus (D; D') for use in a communications network equipment (ETPL; ETLL) for processing E1-type data frames, the apparatus being **characterized in that** it comprises processor means (MT) adapted, on receiving at least one E1-type frame addressed to a given E1 destination port, to encapsulate the totality of said received E1-type frame in a payload data field of an Ethernet frame in order to send it to an Ethernet destination port providing access to said given E1 destination port.

2. A processor apparatus according to claim 1, **characterized in that** said processor means (MT) are adapted, on receiving a plurality of E1-type frames addressed to a common Ethernet destination port providing access to their respective given E1 destination ports: i) to group at least some of said E1-type frames to constitute at least one group of at most n E1-type frames; ii) to associate with each group a control header comprising data that represents it; and iii) to encapsulate the E1-type frames of each group and the associated control header in a payload data field of an Ethernet frame in order to send it to said common Ethernet destination port.

3. A processor apparatus according to claim 2, **characterized in that** said processor means (MT) are adapted to deliver periodically an Ethernet frame including at most n E1-type frames and the associated control header addressed to a common Ethernet destination port.

4. A processor apparatus according to claim 2 or claim 3, **characterized in that** said processor means (MT) are adapted, in the event of grouping a number of E1-type frames greater than n, to build at least two Ethernet frames each comprising at most n E1-type frames designating the same common Ethernet destination port.

5. A processor apparatus according to any one of claims 1 to 4, **characterized in that** the number n of E1 frames in a group is an integer from 1 to 46.

6. A processor apparatus according to any one of claims 2 to 5, **characterized in that** said processor means (MT) are adapted to integrate into at least some of the control headers data representing an Ethernet frame number and/or a sequence number and/or synchronization information.

7. A processor apparatus according to any one of claims 1 to 6, **characterized in that** said processor means (MT) are adapted to add a header comprising data representing at least said given E1 destination port to each E1 frame received before encapsulating said E1 frame and the added header in said payload data field of an Ethernet frame.

8. A processor apparatus according to claim 7, **characterized in that** said processor means (MT) are adapted to integrate into at least some of the headers added to the E1-type frames data representing the frame type and/or at least one frame status and/or timing justification information.

9. A processor apparatus according to any one of claims 1 to 8, **characterized in that** said processor means (MT) are adapted on receiving an Ethernet frame encapsulating at most n E1 frames to extract said encapsulated E1 frames from said Ethernet frame in order to deliver them to outputs providing access to their respective given E1 destination ports.

10. E1-type line physical terminal equipment (ETPL) for use in a communications network, **characterized in that** it includes at least one E1 line interface unit (LIUi) adapted to receive E1 data frames and at least one processor apparatus (D) according to any one of the preceding claims coupled to said E1 line interface unit (LIUi) in order to exchange E1 frames with it.

11. E1-type line logical termination equipment (ETLL) for use in a communications network, **characterized in that** it comprises i) at least one processor apparatus (D) according to any one of claims 1 to 9 adapted to exchange Ethernet frames encapsulating at most n E1 frames with an E1 line physical termination equipment (ETPL) according to claim 10 and ii) framer means (MF) fed with E1 frames by said processor apparatus (D) and adapted to extract from said E1 frames the channel that they contain.

12. Equipment according to claim 11, **characterized in that** it comprises processor means (MP) adapted to process said channels extracted by said framer means (MF).

13. Frame switching equipment (CA) for use in an asynchronous communications network, **characterized in that** it comprises i) at least one Ethernet frame switch (AT) having at least one input adapted to receive Ethernet frames generated by an E1 line physical termination equipment (ETPL) according to claim 10 and adapted to switch each Ethernet frame received to an output selected as a function of instructions and ii) at least one E1 line logical termination equipment (ETPL) according to claim 11 fed with Ethernet frames by said Ethernet frame switch (AT).

## Patentansprüche

1. Vorrichtung (D; D') zur Bearbeitung von E1-Datenrahmen, für eine Kommunikationsnetzausrüstung (ETPL; ETLL) **dadurch gekennzeichnet, dass** sie Mittel zur Bearbeitung (MT) enthält, die so aufgebaut sind, dass beim Empfang mindestens eines E1-Rahmens, der für einen bestimmten E1-Zielport bestimmt ist, dieser empfangene gesamte E1-Rahmen in einem Nutzdatenbereich eines Ethernet-Rahmens gekapselt wird, um ihn zu einem Ethernet-Zielport zu übertragen, der den Zugriff auf den bestimmten E1-Zielport ermöglicht.

2. Vorrichtung gemäß Anspruch 1, **dadurch gekennzeichnet, dass** diese Bearbeitungsmittel (MT) so aufgebaut sind, dass sie beim Empfang von mehreren E1-Rahmen, die für einen gemeinsamen Ethernet-Zielport bestimmt sind, der den Zugriff auf ihre bestimmten jeweiligen E1-Zielports ermöglicht, i) mindestens einige dieser E1-Rahmen zusammenfassen, um mindestens einen Komplex mit höchstens n E1-Rahmen zu bilden, ii) jeden Komplex mit einem Steuerungsvorsatz verknüpfen, der Daten enthält, die für ihn stehen, und iii) die E1-Rahmen jedes Komplexes und den zugehörigen Steuerungsvorsatz in einem Nutzdatenbereich eines Ethernet-Rahmens kapseln, um ihn zu diesem gemeinsamen Ethernet-Zielport zu übertragen.

3. Vorrichtung gemäß Anspruch 2, **dadurch gekennzeichnet, dass** diese Bearbeitungsmittel (MT) so aufgebaut sind, dass sie in regelmäßigen Abständen einen Ethernet-Rahmen erstellen, der höchstens n E1-Rahmen und den zugehörigen Steuerungsvorsatz enthält, und für einen gemeinsamen Ethernet-Zielport bestimmt ist.

4. Vorrichtung gemäß einem der Ansprüche 2 und 3, **dadurch gekennzeichnet, dass** diese Bearbeitungsmittel (MT) so aufgebaut sind, dass sie im Falle der Zusammenfassung einer Anzahl von E1-Rahmen größer n, mindestens zwei Ethernet-Rahmen bilden, die jeweils höchstens n E1-Rahmen enthalten, die ein und denselben gemeinsamen Ethernet-Zielport bezeichnen.

5. Vorrichtung gemäß einem der Ansprüche 1 bis 4, **dadurch gekennzeichnet, dass** die Anzahl n von E1-Rahmen eines Komplexes eine ganze Zahl zwischen 1 und 46 ist.

6. Vorrichtung gemäß einem der Ansprüche 2 bis 5, **dadurch gekennzeichnet, dass** diese Bearbeitungsmittel (MT) so aufgebaut sind, dass sie in mindestens einige der Steuerungsvorsätze Daten integrieren, die für eine Ethernet-Rahmennummer stehen und/oder eine Folgenummer und/oder Synchronisationsinformationen.

7. Vorrichtung gemäß einem der Ansprüche 1 bis 6, **dadurch gekennzeichnet, dass** diese Bearbeitungsmittel (MT) so aufgebaut sind, dass sie jedem empfangenen E1-Rahmen einen Vorsatz hinzuzufügen, der Daten enthält, die mindestens für diesen bestimmten E1-Zielport stehen, bevor dieser E1-Rahmen und der hinzugefügte Vorsatz in diesem Nutzdatenbereich eines Ethernet-Rahmens gekapselt werden.

8. Vorrichtung gemäß Anspruch 7, **dadurch gekennzeichnet, dass** diese Bearbeitungsmittel (MT) so aufgebaut sind, dass sie in mindestens einige der Vorsätze, die den E1-Rahmen hinzugefügt werden, Daten integrieren, die für den Rahmentyp und/oder mindestens einen Rahmenstatus und/oder eine Taktstopfen-Information stehen.

9. Vorrichtung gemäß einem der Ansprüche 1 bis 8, **dadurch gekennzeichnet, dass** diese Bearbeitungsmittel (MT) so aufgebaut sind, dass sie beim Empfang eines Ethernet-Rahmens, der höchstens n E1-Rahmen kapselt, aus diesem Ethernet-Rahmen diese gekapselten E1-Rahmen herausziehen, so dass sie sie an Ausgänge liefern, die es ermöglichen, auf ihre jeweiligen bestimmten E1-Zielports zuzugreifen.

10. Physikalische E1-Leitungsabschlussausrüstung (ETPL), für ein Kommunikationsnetz, **dadurch gekennzeichnet, dass** sie mindestens eine E1-Leitungsschnittstelle (LIUi) beinhaltet, die geeignet ist, E1-Datenrahmen zu empfangen, und mindestens eine Bearbeitungsvornchtung (D) gemäß einem der vorstehenden Ansprüche, gekoppelt an diese E1-Leitungsschnittstelle (LIUi), um mit selbiger E1-Rahmen auszutauschen.

11. Logische E1-Leitungsabschlussausrüstung (ETLL), für ein Kommunikationsnetz, **dadurch gekennzeichnet, dass** sie folgendes enthält: i) mindestens eine Bearbeitungsvorrichtung (D) gemäß einem der Ansprüche 1 bis 9, die geeignet ist, Ethernet-Rahmen auszutauschen, die höchstens n E1-Rahmen kapseln mit einer physikalischen E1-Leitungsabschlussausrüstung (ETPL) gemäß Anspruch 10, und ii) Mittel zur Rahmenbildung (MF), die durch diese Vorrichtung (D) mit E1-Rahmen versorgt werden und die so aufgebaut sind, dass sie aus diesen E1-Rahmen die Kanäle herausziehen, die darin enthalten sind.

12. Ausrüstung gemäß Anspruch 11, **dadurch gekennzeichnet, dass** sie Bearbeitungsmittel (MP) enthält, die so aufgebaut sind, dass sie die von diesen Mitteln zur Rahmenbildung (MF) herausgezogenen Kanäle bearbeiten.

13. Ausrüstung zum Lotsen von Rahmen (CA) für ein asynchrones Kommunikationsnetz, **dadurch gekennzeichnet, dass** sie folgendes enthält: i) mindestens einen Ethernet-Rahmen-Lotsen (AT), der mindestens einen Eingang zum Empfangen der Ethernet-Rahmen enthält, die von einer physikalischen E1-Leitungsabschlussausrüstung (ETPL) gemäß Anspruch 10 erzeugt wurden, und jeden empfangenen Ethernet-Rahmen auf einen Ausgang lenkt, der in Abhängigkeit von Anweisungen gewählt wird, und ii) mindestens eine logische E1-Leitungsabschlussausrüstung (ETPL) gemäß Anspruch 11, die von diesem Ethernet-Rahmen-Lotsen (AT) mit Ethernet-Rahmen versorgt wird.
